# EUROPEAN PATENT SPECIFICATION

(11) **EP 1 129 810 B1**
(45) Date of publication and mention of the grant of the patent: **28.05.2008**
(21) Application number: 00307353.3
(22) Date of filing: 25.08.2000
(51) Int. Cl.: B23K 20/12

(54) **Friction stir welding method and frame member to be used in a friction stir welding method**
Reibrührschweissverfahren und Profilteil zur Verwendung in einem Reibrührschweissverfahren
Méthode de soudage par friction à mouvement cyclique et élément de châssis à utiliser dans une méthode de soudage par friction à mouvement cyclique

(30) Priority: 25.02.2000 JP 2000049099
(43) Date of publication of application: 05.09.2001
(73) Proprietor: Hitachi, Ltd., Chiyoda-ku, Tokyo 100-8010 (JP)
(72) Inventor: Ezumi, Masakuni, Kudamatsu-shi, Yamaguchi 744-0002 (JP); Fukuyori, Kazushige, Kudamatsu-shi, Yamaguchi 744-0031 (JP); Matsunaga, Tetsuya, Kudamatsu-shi, Yamaguchi 744-0002 (JP)
(74) Representative: Hackney, Nigel John

(56) References cited:
- EP-A- 0 797 043
- EP-A- 0 893 190
- EP-A- 0 947 280
- EP-A- 1 057 574
- EP-A- 1 103 334
- EP-A- 1 123 770
- EP-A- 1 123 771
- EP-A- 1 129 811
- PATENT ABSTRACTS OF JAPAN vol. 2000, no. 01, 31 January 2000 (2000-01-31) & JP 11 267858 A (SUMITOMO LIGHT METAL IND LTD), 5 October 1999 (1999-10-05)
- PATENT ABSTRACTS OF JAPAN vol. 2000, no. 01, 31 January 2000 (2000-01-31) & JP 11 267859 A (SUMITOMO LIGHT METAL IND LTD), 5 October 1999 (1999-10-05)
- PATENT ABSTRACTS OF JAPAN vol. 1997, no. 12, 25 December 1997 (1997-12-25) & JP 09 221024 A (HITACHI LTD), 26 August 1997 (1997-08-26)

## Description

The present invention relates to a friction stir welding method and to a frame member to be used in a friction stir welding method. For example, the present invention is suitable for a friction stir welding method to form a structure body of an aluminum alloy extruded frame member which is used in a railway vehicle or a building structure and the like.

A friction stir welding method is a method in which by rotating a round rod (called "a rotary tool") which is inserted into a welding portion and moving the rotary tool along a welding line of an extruded frame member, the welding portion is heated, softened and plastically fluidized and is solid-state welded.

The rotary tool is comprised of a small diameter portion which is inserted into the welding portion and a large diameter portion which is positioned next to the small diameter portion of the rotary tool. The small diameter portion and the large diameter portion of the rotary tool have the same axis. A boundary between the small diameter portion and the large diameter portion of the rotary tool is inserted a little into the welding portion. The above stated technique is disclosed, for example in Japanese application patent laid-open publication No. Hei 9-309164 (EP 0797043 A2).

In Fig. 9 of this document (Japanese application patent laid-open publication No. Hei 9-309164 (EP 0797043 A2)) a welding of two faces of hollow extruded frame members is carried out from one of the two faces of the hollow extruded frame members Namely, a plate of one side face is abutted and from the other face side of the other extruded frame member friction stir welding is carried out. An outer face side of said plate is welded flatly.

Shown in Fig. 9 of the above stated document (Japanese application patent laid-open publication No. Hei 9-309164 (EP 0797043 A2)) is a case where friction stir welding of a hollow frame member is carried out from a face of one side. In this case, it is necessary to fix strongly a joint member 60. For this reason, the joint member 60 is fixed temporally to hollow frame members 31 and 32. Since a plate thickness of joint member 60 is thin, the joint member 60 strains in a thickness direction according to a welding heat. For this reason, a problem of accuracy of the structure body arises.

JP-A-11-267859 shows a joining method of two flat members at their edges, in which the members are restrained against moving apart by inter-engaging hook-shaped portions at the edges of the respective members.

JP-A-9-221024 shows the joining of two hollow frame members by one-sided welding. Each member has face plates joined by ribs having a truss structure. The lower face plates of each member project beyond the ends of the respective upper face plates, and abut each other, being joined at their abutment by welding from above. The ends of upper face plates are connected by a connecting plate whose ends are supported on the end portions of the upper face plates. The connecting plate is welded to the upper face plates.

EP-A-1129811 (published 5 September 2001) shows a one-sided welding method similar to that of JP-A-9-221024 described above, and in which the abutting lower face plates are joined by friction stir welding. The connecting plate is friction stir welded by a butt weld to one upper face plate and an overlap weld to the other face plate.

In one aspect the invention provides a friction stir welding method, as set out in claim 1.

In a second aspect, the invention provides a frame member to be used in a friction stir welding method, as set out in claim 7.

### Brief Description of Drawing:

Fig. 1 is a longitudinal cross-sectional view showing before welding, a welding portion of one embodiment of a friction stir welding method according to the present invention;
Fig. 2 is a longitudinal cross-sectional view showing an essential portion of Fig. 1 of the friction stir welding method according to the present invention;
Fig. 3 is a longitudinal cross-sectional view showing, after welding, the welding portion of the friction stir welding method of one embodiment according to the present invention;
Fig. 4 is a longitudinal cross-sectional view showing a hollow frame member of a welding portion of the friction stir welding method of one embodiment according to the present invention;
Fig. 5 is a perspective view showing a car body of a railway vehicle of the friction stir welding method of one embodiment according to the present invention;
Fig. 6A is a longitudinal cross-sectional view of a welding portion of a friction stir welding method of another embodiment according to the present invention;
Fig. 6B is a longitudinal cross-sectional view of a welding portion of a friction stir welding method of another embodiment according to the present invention; and
Fig. 7 is a longitudinal cross-sectional view of, a welding portion of the friction stir welding method of another embodiment according to the present invention.

### Description of the Invention:

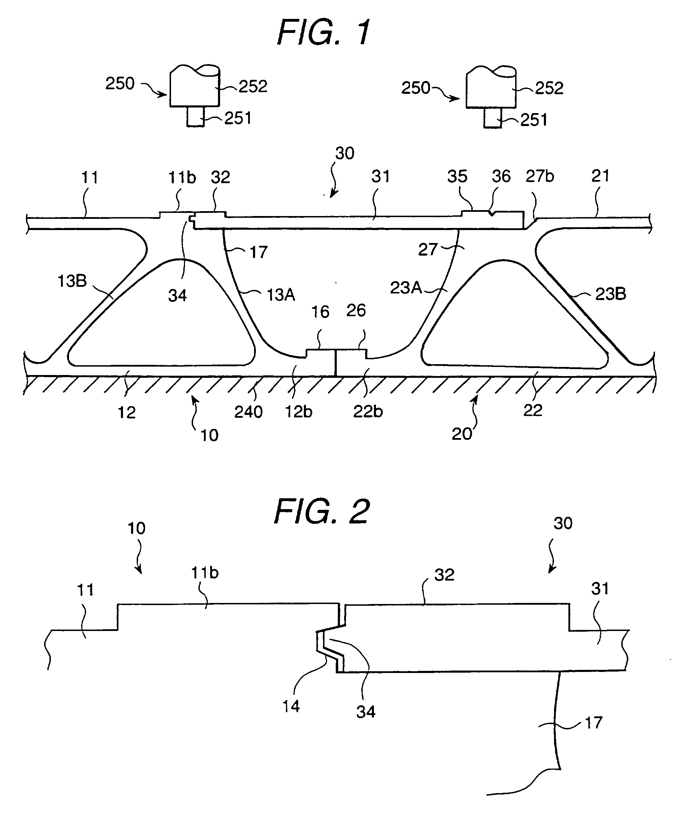

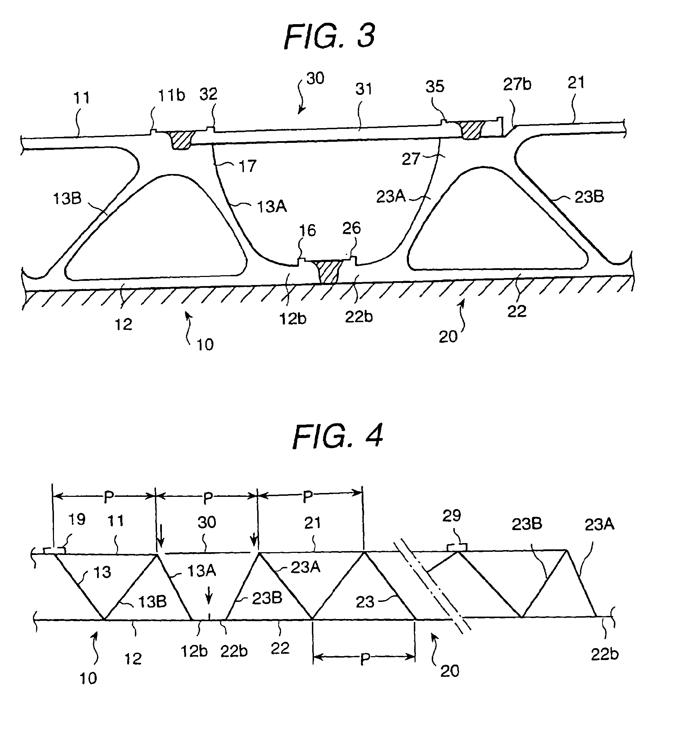

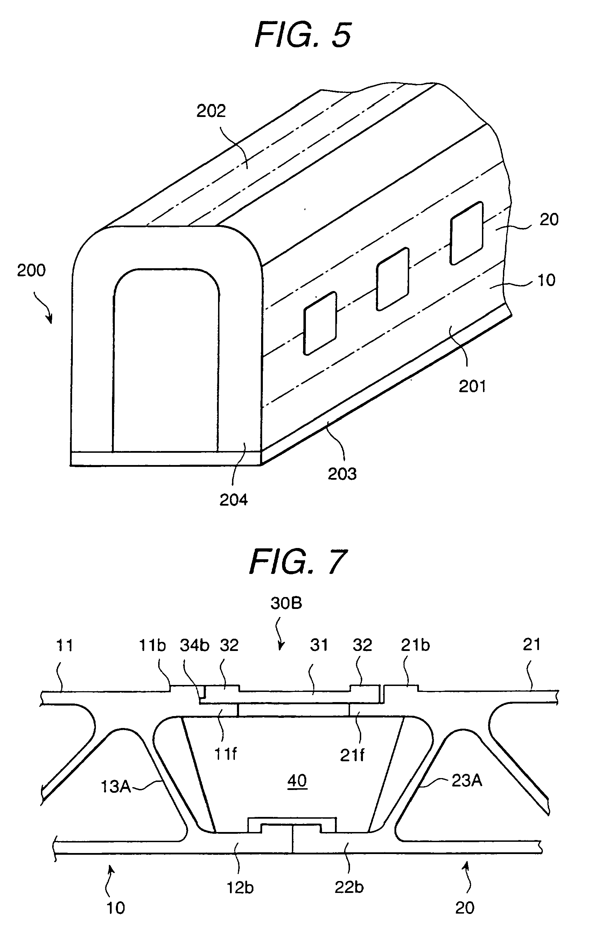

One embodiment of a friction stir welding method according to the present invention will be explained referring to from Fig. 1 to Fig. 5. Fig- 1 is an enlarged view showing an essential portion of Fig. 4. Fig. 4 is a longitudinal -sectional view of a side structure body of Fig. 5.

A car body 200 is comprised of a side structure body 201 for constituting a side face, a roof structure body 202 for constituting a roof, a stand frame 203 for constituting a floor, and a side structure body 204 for constituting an end portion in a longitudinal direction. Each of the side structure body 201, the roof structure body 202, and the stand frame 203 is constituted respectively by welding plural extruded frame members. A longitudinal direction of the extruded frame member is in the longitudinal direction of the car body. The extruded frame member is a hollow frame member made of an aluminum alloy.

A constitution and a welding method of the hollow extruded frame members 10 and 20 for constituting the side structure body 201 will be explained. Other portions and other structure bodies are similar to the above.

The hollow frame members 10 and 20 are comprised of two sheet face plates 11, 12 and 21, 22 and plural ribs 13 and 23 arranged in a truss structure shape.

The two sheet face plates 11 and 12 are substantially in parallel. The two sheet face plates 21 and 22 are substantially in parallel. A pitch of the truss according to the ribs 13 and 23 is the same. The truss structure is constituted by the ribs 13 and 23 and a center line of a plate thickness of the respective face plates 11 and 12 the respective face plates 21 and 22. An apex is formed at side of the face plates 11 and 12 and the face plates 21 and 22.

At a vicinity of the apex of the truss structure in an inner side of the railway car, rails 19 and 29 for installing machines and apparatuses are provided integrally. The rails 19 and 29 are comprised of two L shape members. The rails 19 and 29 become seats for installing the machines and apparatuses such as interior mounting plates and chairs and the like.

End portions of the face plates 12 and 22 which are positioned an outer face side of the car body project to a side of the adjacent hollow frame members 20 and 10 from the end portions of the face plates 11 and 21 in the inner side of the car. These projected face plates are indicated by 12b and 22b. With the end portions of the face plates 12b and 22b abutted together, the friction stir welding is carried out. This friction stir welding is carried out to lessen a gap of the abutted portion. The plate thickness of each of the face plates 12b and 22b is thicker than another portion of the face plates 12 and 22.

The hollow frame members 10 and 20 are mounted on a bed 240 by laying the face plates 12 and 22 downwardly. The sides of the face plates 11 and 21 are upward. By inserting a rotary tool 250 to the welding portion from above the friction stir welding is carried out. The friction stir welding is carried out from the inner side of the car.

To the end portion (the abutted portion) of the face plates 12b and 22b, raised portions 16 and 26 which project in the inner side of the car (namely, the face plates 11 and 21 side) are provided. A width and a height of each of the raised portions 16 and 26 are substantially the same.

Between the end portion of the face plate 11 in the car inner side and the end portion of the face plate 21 there is welded a connection member 30. The end portion of the connection member 30 is mounted (overlapped) on the seats 17 and 27 which are provided on the apex of the truss structure. The seats 17 and 27 are recessed from the outer face (upper face) of the face plates 11 and 12.

The seat 17 is formed at the end portion of the hollow frame member 10 from a normal line which passes through an intersecting line between the rib 13A and the rib 13B. A face reaching from the seat 17 to the outer face (the upper face) of the face plate 11 is formed on the above stated normal line. To an end portion of the face plate 11 at the seat 17 side, raised portion 11b which projects at the outer face (the upper face) side is arranged.

To the end portion of the connection member 30 a raised portion 32 which projects at the outer face (the upper face) side is arranged. A width and a height of the raised portions 11b and 32 are the same to those of the raised portions 16 and 26. The width of the seat 17 is the same as the width of the raised portion 32.

At a vertical face of the face plate 11, there is a groove 14 which is open in the direction of an end portion (an end portion of the face plate 12b of another hollow frame member 20) of the hollow frame member 10. The groove 14 is continued in a longitudinal direction of the hollow frame member 10. The groove 14 has a trapezoidal form. A height of the trapezoidal form at the open side of the groove 14 is formed large.

Into the groove 14 there is inserted, a trapezoidal form projection portion 34 of the end portion of the connection member 30. As to the sizes of the two trapezoidal forms, the size of the groove 14 is larger than the size of the projection portion 34. A vertical face of the end portion of the face plate 11 is coincided with a normal line which passes through the intersecting point of the truss structure. For this reason, the vertical face is coincided with the axial center of the rotary tool 250. A depth of the groove 14 is less than a half of the diameter of the small diameter portion 251 of the rotary tool 250.

When the projection portion 34 is inserted into the groove 14, a lower face of the connection member 30 is contacted to an upper face of the seat 17, further a face of an upper side of the projection portion 34 is designed to contact to a face of an upper side of the groove 14.

The height of the projection portion 34 is thinner than a thickness of the end portion of the connection member 30. The groove 14 and the projection portion 34 are positioned in a range of the plate thickness including the raised portions 11b and 32. The upper ends of the groove 14 and the projection portion 34 are above the upper face of the face plate 11 and an extension line of the upper face of the plate portion excepting the raised portion 32 of the connection member 30.

Since the raised portions 11b and 32 are provided, even if the plate thickness of the face plate 11 and the plate thickness of the connection member 30 are thin, it is possible to provide the groove 14 having a desired height.

The seat 27 is arranged at an intersecting point between the rib 23A and the rib 23B as a center. At a center of the width of the seat 27 the above stated intersecting point is arranged. Namely, the apex of the truss structure of the end portion is arranged at the central portion of the width of the seat 27. The face reaching from the seat 27 to the face plate 22 is inclined to form a groove for the arc welding to the connection member 30.

A raised portion 35 is arranged at the end portion of the connection member 30 which mounts on the seat 27. A height of the raised portion 35 is similar to that of the raised portions 16, 26, 11b and 32. A width of the raised portion 35 is similar to the total of the raised portions 16 and 26 The connection member 30 is arranged to aim to join the surfaces of the plate plates 11 and 21 continuously. The central portion except for the two end portions of the connection member 30 is a plate 31 and the plate thickness of the plate 31 is substantially same as the plate thickness of the face plates 11 and 21. At the upper face of the raised portion 35 a V-shape groove 36 is provided. The groove 36 is arranged at a center of the width of the raised portion 35.

A width of the raised portion 35 is larger than the diameter of the large diameter portion 252 of the rotary tool 250. The groove 36 is used for position detecting to lead the rotary tool 250. The groove 36 is detected by a laser sensor and the axial center of the rotary tool 250 is coincided with the groove 36. An extension line of the groove 36, namely on axial center of the rotary tool 250, there is an intersecting point of the two ribs 23A and 23B.

The width of the connection member 30 is smaller than an interval of the face plates 11 and 21 of the two hollow frame members 10 and 20. The connection member 30 is an extruded frame member of the same material as the hollow frame members 10 and 20. A length of the connection member 30 is, for example, 1 m degree. The plural connection members 30 are arranged in the length directions of the hollow frame members 10 and 20.

The space of the connection members 30 is as small as possible. Since the connection member 30 has no rib, the connection member 30 can bend easily in the plate thickness and the transportation thereof and the like are difficult.

A distance P from the end portion of the face plate 11 to the end portion of the face plate 21 (a distance from the apex of the truss structure of the end portion of the hollow frame member 10 and the apex of the truss structure of the end portion of the hollow frame member 20) is the same pitch P of the truss structure of the other positions.

With the sides of the face plates 11 and 12, 21 and 22 forming the apex, each of the truss structure of the hollow frame members 10 and 20 is an isosceles triangle. However, the truss structure of the end portion of the hollow frame members 10 and 20 is not an isosceles triangle.

For the above stated reason, the rib 13A is connected to midway of the face plate 12. For the above stated reason, the rib 23A is connected to a midway of the face plate 22. Between a connection portion between the rib 13A and the face plate 12 and a connection portion between the rib 23A and the face plate 22, a space for inserting the friction stir welding apparatus is formed.

The manufacturing method of this structure body will be explained. The hollow frame members 10 and 20 are mounted on the bed 240. Next, the face plates 12b and 22b are abutted. Next, these hollow frame members 10 and 20 are fixed on the bed 240. Next, the portions of the end faces 12d and 22d are fixed temporarily by arc welding. This temporary welding is carried out intermittently.

An upper face of the bed 240 on which the abutted portion of the face plates 12b and 22b are mounted is flat. Three portions which are the vicinity of the abutted portion of the face plates 12b and 22b, an intersecting point vicinity of the ribs 13A and 23A, the face plates 12b and 22b, and an intersecting point vicinity of the ribs 13B and 23B and the face plates 12 and 22 are mounted on the bed 240 having the same height.

With this condition, the rotary tool 250 of the friction stir welding apparatus is inserted from above to the abutted portion of the raised portions 16 and 26 and is moved along to a welding line and then the friction stir welding is carried out. The axial center of the rotary tool 250 is in a perpendicular direction (the direction along to the normal line of the welding portion). However, relative to the advancing direction of the rotary tool 250 the axial center is inclined as already known.

The rotary tool 250 comprises the large diameter portion 252 and the small diameter portion 251 at a tip end of the large diameter portion 252. The tip end (the lower end) of the small diameter portion 251 of the rotary tool 250 is positioned below the upper face of the face plates 12b and 22b.

The lower end of the large diameter portion 252 of the rotary tool 250 is positioned between the top of the raised portions 16 and 26 and the upper side of the face plates 12b and 22b at the inner side of the car (the side facing the plates 11 and 21). A diameter of the large diameter portion 252 of the rotary tool 250 is smaller than a width which is comprised of the two raised portions 16 and 26. The small diameter portion 251 of the rotary tool 250 is a screw member.

During the friction stir welding, the tops of the raised portions 16 and 26 are pressed donwardly by a roller which moves the rotary tool 250 together with.

The raised portions 16 and 26 are detected by the laser sensor. According to this, a height position of the raised portions 16 and 26 is requested and an insertion amount of the rotary tool 250 is determined. Further, a gap of the abutted portion of the two raised portions 16 and 26 is requested and to this position the axial center of the rotary tool 250 is coincided with.

According to this friction stir welding, the gap of the abutted portion of the face plate 12b and 22b is buried and welded. The original material of the metal for burying the gap is the raised portions 16 and 26. The outer face side (the outer side of the car) of the face plates 12b and 22b is welded flatly. At the outer face side of the face plates 12b and 22b, there is no recessed portion of the welding line.

The upper face of the raised portions 16 and 26 becomes a convex form according to the large diameter portion 252 of the rotary tool 250. At the both ends of the recessed portion, the raised portions 16 and 26 are left.

Next, the connection member 30 is mounted on the seats 17 and 27 of the face plates 11 and 21. A vertical face of the connection member 30 (except for the projection portion 34) is abutted to a vertical face (except for the groove 14) of an end portion of the face plate 11. It is desirable to form the gap of the vertical faces of the both hollow frame members 10 and 20 as small as possible. It is desirable to form small an interval between the end portion of the connection member 30 in the longitudinal direction of the hollow frame member 10 and 20 and the end portion of the adjacent connection member 30.

The insertion of the projection portion 34 to the groove 14 can be arranged by inserting from the one end side of the longitudinal direction of the hollow frame members 10 and 20. Or, the distance from the vertical face of the face plate 11 to a slope face 27b is provided larger than the width of the connection member 30 and after the connection member 30 is mounted on the seats 17 and 27, the connection member 30 is moved to the side of the projection portion 34, and the projection portion 34 is inserted into the groove 14. Or, from the diagonal above, the projection portion 34 is inserted into the groove 34.

For example, the connection member 30 is mounted on the seat 17 and the slope face 27b, the connection member 30 is moved to the side of the face plate 11. The positions, the shapes and the sizes of the groove 14 and the projection 34 are provided to enable insert them from the diagonal upper portion.

Next, the end portion of the connection member 30 is fixed temporarily to the face plates 11 and 21 by arc welding. This temporary welding is carried out intermittently.

Since the face plate 11 side of the connection member 30 is inserted into the groove 14, the connection member 30 does not move in the upper and lower direction, etc .. For this reason, is unnecessary to carry out the temporary welding to this portion. When the temporary welding is carried out, the number of the welds can be lessened. The temporary welding is carried out to weld the raised portion 32 and the raised portion 11b. For this reason, the thermal strain of the connection member 30 and the hollow frame member 10 can be lessened.

Next, using the friction stir welding apparatus which is used for the friction stir welding of the abutted portion of the face plates 12b and 22b, the welding of the abutted portion at one end of the connection member 30 and the end portion of the face plate 11 is carried out. This is same as the welding of the abutted portion of the raised portions 16 and 26. The lower end of the small diameter portion 251 of the rotary tool 250 is inserted so as to reach the seat 17.

The space formed between the groove 14 and the projection portion 34 is buried by the raised portions 11b and 32 as the original material. For this reason, even the groove 14 exists, the welding is carried out as the welding of the ordinary abutted portion.

Next, the welding of the seat 27 and other end of the connection member 30 is carried out. With a condition where the rotary tool 250 is inserted from above into a portion to which the connection member 30 and the seat 27 are overlapped, the rotary tool 250 is moved along the welding line and the friction stir welding is carried out. A width of the raised portion 35 is larger than the diameter of the large diameter portion 252 of the rotary tool 250. At a center of the raised portion 35 the groove 36 is provided. The rotation axial center of the rotary tool 250 is coincided with the groove 36. A tip end of the small diameter portion 251 of the rotary tool 250 is inserted deeply to the seats 17 and 27.

With this construction, the overlapping welding is carried out. The lower end of the large diameter portion 252 of the rotary tool 250 is positioned between the upper face of the connection member 30 being the non-raised portion and the top of the raised portion 35.

The upper face of the raised portion 35 become a convex form according to the large diameter portion 252 of the rotary tool 250. At the both ends of the recessed portion the raised portion 35 is left.

The above stated sensor of the friction stir welding apparatus detects the groove 36 and the rotary tool 250 is moved along the groove 36.

Fig. 3 shows schematically the state of the welding portion after the welding. A hatching portion shows the welding portion.

The axial center of the rotary tool 250 is positioned at the apex point of the truss structure of the two ribs 13A and 13B or on a perpendicular line in the vicinity thereof. The axial center of the rotary tool 250 is positioned at the apex point of the truss structure of the two ribs 23A and 23B or on a perpendicular line in the vicinity thereof.

Against the eccentric matter, it corresponds to an increase of the plate thickness of the ribs 13A and 13B, a shape of the are which connects the rib and the face plate, a thickness of the connection member 30, and the thickness of the seats 17 and 27, etc.. Against the eccentric matter, it corresponds to an increase of the plate thickness of the ribs 23A and 23B, a shape of the arc which connects the rib and the face plate, a thickness of the connection member 30, and the thickness of the seats 17 and 27, etc..

According to the above, one of the joint (the joint of the raised portions 11b and 32) can be the butt joint, according to the improvement of the joint efficiency and the reduction of the stress concentration in the bent portion, the strength can be improved.

Further, since the fixing of the one end of the connection member 30 according to the arc welding can be unnecessary or can be lessened, the thermal strain of the structure body can be lessened and the outer appearance can be improved and the installation of the interior mounting members can be carried out easily.

The welding of both faces of the hollow frame members 10 and 20 is carried out from one side face. For this reason, it is unnecessary to reverse the structure body after one face is welded. Accordingly, the structure can be manufactured at a low cost and with a high accuracy.

Further, the outer face of the welding portion of the face plates 12b and 22b can be welded flatly. The raised portions 16, 26 and 35 are arranged in the inner side of the structure body and the inner side of the car body and they are not present at a portion (the outer face side, the car outer side) in which a flat face is required. Further, at the car outer side there is no recessed portion which is caused by the rotary tool 250. For this reason, the cut-off etc. of the raised portions 16, 26 and 35 is unnecessary and the car body can be manufactured with a low cost.

Further, the bed 240 can be replaced by the backing member such as a roller and the like.

Further, the abutted portion is welded at first, next the overlapped portion is welded. For this reason, in comparison with the case wherein overlapped portion is welded at first and next the abutted portion is welded, it is considered that the good friction stir welding can be carried out.

It is considered that the strength of the welding portion (the welding portion between the seat 27 and the connection member 30) of the overlapping portion and the strength of the bending portion of the face plate 21 are inferior to the strength of the abutted portion (the welding portion between the face plate 11 and the connection member 30). In this case the end portion of the connection member 30 and the end portion of the face plate 21 are welded by the arc welding. This arc welding can be carried to the portions where the more strength is necessary, for example the position near to the window corner portion.

Further, the body welded by the above stated manner can be used as an outer face (face to be seen visible) of the structure body such as the building structure body and the like.

The portion for mounting the connection member 30 can be set at the structure and the portion in which it can bear to the load during the friction stir welding. For example, the structure and portion can be set as shown in Fig. 9 of the above stated document (Japanese application patent laid-open publication No. Hei 9-309164 (EP 0797043 A2)).

The welding between the hollow frame member 10 and the connection member 30 is at the abutted portion.

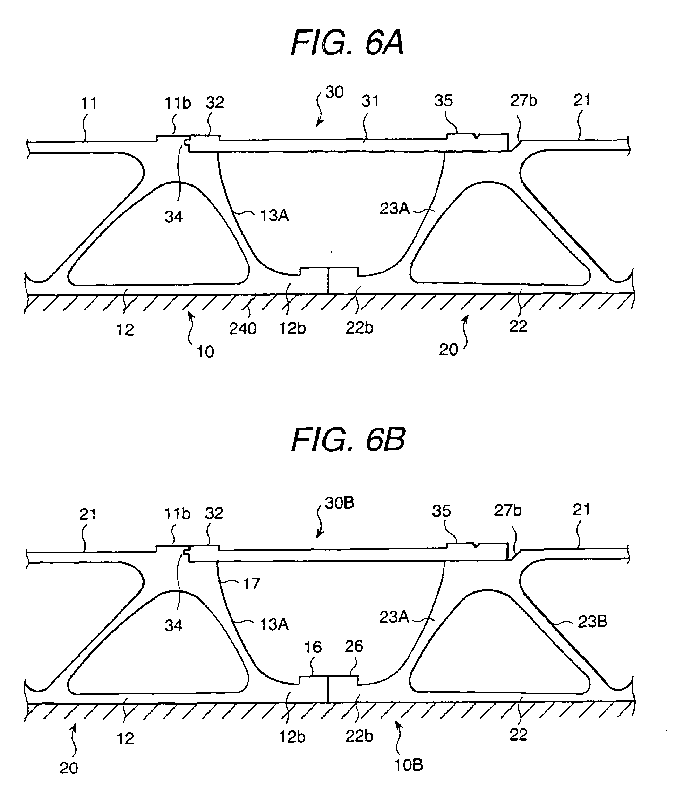

An embodiment of Fig. 6A and Fig. 6B will be explained. This is suited for a manufacture of a large structure body by welding more than three hollow frame members, for example, the side structure body 201. The relationship between the right side hollow frame members 10 and 20 and the connection member 30 is similar to that of the embodiment of Fig. 1. To another end (the right end) of the central hollow frame member 20, a hollow frame member 10B and a connection member 30B are welded. A left end of the hollow frame member 10B and the connection member 30B are the same to the left end of the hollow frame member 20 and the connection member 30.

A structure of the another end (the right end) of the hollow frame member 20 is the same as a structure of the right end of the hollow frame member 10. A structure of the left end of hollow frame member 10B which is welded to the end of the hollow frame member 20 is the same as the structure of the left end of the hollow frame member 20. A structure and a direction of the connection member 30B are same as those of the connection member 30.

The left end of the hollow frame member 20 and the hollow frame member 10 are shown in an upper portion of Fig. 6A. The right end of the hollow frame member 20 and the hollow frame member 10B are shown in a lower portion of Fig. 6B.

Namely, three hollow frame members are welded. At one end (the left end) of the face plate 21 of the central hollow frame member 20 a slope face 27b is provided, at another end (the right end) of the face plate 21 the raised portion 11b and the groove 14 are provided. According to this structure, the direction of the raised portion 32 of the connection members 30 and 30B of the both sides of the central hollow frame 20 and the direction of the projection portion 34 are the same direction, so that a risk of mistake of the arrangement of the connection member 30 can be lessened.

As to the welding procedure, the three hollow frame members are mounted on the bed 240 and restrained. Hereinafter the method is similar to the case of Fig. 1.

An embodiment of Fig. 7 will be explained. In a space bounded by the face plates 12b and 22b, the ribs 13A and 23A, and the connection member 30, a supporting stand 40 is arranged. The supporting stand 40 is mounted on the face plates 12b and 22b. The end portion of the connection member 30 is mounted on projection chips llf and 21f of the end portions of the face plates 11 and 21. The lower portion of the abutted portion including the projection chips llf and 21f is mounted in the supporting stand 40. At both ends of the connection member 30, the raised portion 32 is provided. Both ends are abutted and welded. At one end portion the projection portion 34b is provided.

At the abutted portions of the face plates 11 and 21 and the connection member 30 the friction stir welding is carried out. When the abutted portion between the face plate 21 and the connection member 30 is welded, the face plate 21 and the connection member 30 are combined with the high accuracy. After the friction stir welding, the supporting stand 40 is pulled out in the longitudinal direction.

According to the present invention, since the arc welding of the connection member can be lessened, the structure body having high accuracy can be provided.

## Claims

1. A friction stir welding method comprising the steps of:
(i) providing two hollow frame members (10, 20), each having first (11, 21) and second (12, 22) sheet face plates which are parallel to each other and spaced apart from each other in a thickness direction of the hollow frame members and are connected by a plurality of ribs (13, 23), said ribs (13, 23) defining a truss structure with an apex thereof formed at a side of said first sheet face plates (11, 21), wherein each sheet face plate (11, 12, 21, 22) extends in a lateral direction which is transverse to said thickness direction and has at a lateral edge an end portion, wherein on each hollow frame member the end portion of the second sheet face plate (12, 22) projects beyond the end portion of the first sheet face plate (11, 21);
(ii) joining together by friction stir welding the end portions (12b, 22b) of the respective second sheet face plates (12, 22) by means of a rotary friction stir welding tool (250) applied at the inner side of said end portions (12b, 22b) thereof;
(iii) providing a connection member (30) having first and second ends and arranging the first and second ends of said connection member (30) respectively at the end portions of the first sheet face plates (11, 21) of the first and second hollow frame members (10, 20);
(iv) friction stir welding together the first end of said connection member (30) and the end portion of the first sheet face plate (11) of the first hollow frame member (10) by means of a rotary friction stir welding tool (250) which is applied at the outer side of the first hollow frame member (10), and
(v) friction stir welding together the second end of said connection member (30) and the end portion of the first sheet face plate (21) of the second hollow frame member (20) by means of a rotary friction stir welding tool (250) applied at the outer side of the second hollow frame member (20),
**characterised in that** in step (iii), when said first end of said connection member (30) is arranged at the end portion of the first sheet face plate (11) of the first hollow frame member (10), said first end of said connection member (30) is inserted into a groove (14), said groove (14) being formed in the end face of the end portion of the first sheet face plate (21), said face extending in said thickness direction of the hollow frame member (10); and
after step (iii), temporarily fixing said second end of the connection member to said first face plate of said second frame member.

2. A friction stir welding method according to claim 1, wherein the depth of said groove (14) is less than a half of a diameter of a small diameter portion (251) of said rotary friction stir welding tool (250) and wherein, in step (v), said rotary friction stir welding tool (250) is applied at mutually abutting faces of said connection member (30) and the end portion of the first sheet face plate (11) of the first hollow frame member (10), said mutually abutting faces extending in said thickness direction.

3. A friction stir welding method according to claim 1, wherein at each of the portions of said hollow frame members (10, 20) to which said connection member is attached, there is provided a recessed portion on each of said hollow frame members (10, 20), said recessed portions projecting in said thickness direction from said second sheet face plates (12, 22) to the outer side of said first sheet face plates (11, 21).

4. A friction stir welding method according to claim 1 or claim 3, wherein the friction stir welding in step (iv) is carried out at mutually abutting faces of said connection member (30) and said end portion of said first sheet face plate (11) of said first hollow frame member (10), said mutually abutting faces extending in said thickness direction.

5. A friction stir welding method according to claim 4, wherein said step of friction stir welding between said first end of said connection member (30) and said end portion of the first sheet face plate (11) is carried out to such an extent in said thickness direction that said groove (14) is included in the resultant weld.

6. A friction stir welding method according to claim 3, wherein the friction stir welding in step (v) is carried out where the first end of said connection member (30) overlaps in said lateral direction said recessed portion of said first hollow frame member (10).

7. A frame member to be used in a friction stir welding method, said member comprising:
first (11) and second (12) sheet face plates which are parallel to each other and spaced apart from each other in a thickness direction of the frame member, said sheet face plates connected by a plurality of ribs (13), said ribs (13) defining a truss structure with an apex thereof formed at a side of said first sheet face plate (11), and each sheet face plate (11, 12) extending in a lateral direction which is transverse to said thickness direction and having at a lateral edge an end portion, wherein the end portion of the second sheet face plate (12) projects beyond the end portion of the first sheet face plate (11),
**characterised in that** a groove (14) is provided on a face of said end portion of said first sheet face plate (11), said face extending in said thickness direction and said groove (14) extending in a longitudinal direction, said longitudinal direction being orthogonal to each of said thickness direction and said lateral direction.

8. A frame member according to claim 7, wherein said end portion of said first face plate (11) has a raised portion (11b) projecting from its outer face in said thickness direction, and
said groove (14) has an upper side arranged on an apex side of said raised portion (11b) remote from an extension line of the outer side of said first sheet face plate (11).

## Patentansprüche

1. Reibrührschweißverfahren, in dem:
(i) zwei Hohlrahmenelemente (10, 20) bereitgestellt werden, die jeweils eine erste (11, 21) und eine zweite (12, 22) Seitenplatte aufweisen, die parallel zueinander und in einer Dickerichtung der hohlen Rahmenelemente in Abstand voneinander stehen, und die durch mehrere Rippen (13, 23) verbunden sind, wobei die Rippen (13, 23) eine Fachwerkstruktur definieren, deren Spitze an einer Seite der ersten Seitenplatten (11, 21) ausgebildet ist, wobei jede der Seitenplatten (11, 12, 21, 22) in einer Querrichtung verläuft, die transversal zu der Dickerichtung steht und an einer Seitenkante einen Endabschnitt aufweist, wobei an jedem Hohlrahmenelement der Endabschnitt der zweiten Seitenplatte (12, 22) über den Endabschnitt der ersten Seitenplatte (11, 21) hinausragt;
(ii) die Endabschnitte (12b, 22b) der zugehörigen zweiten Seitenplatten (12, 22) miteinander reibrührverschweißt werden, indem ein drehbares Reibrührschweißwerkzeug (250) an der Innenseite der Endabschnitte (12b, 22b) angewendet wird;
(iii) ein Verbindungselement (30) mit einem ersten und einem zweiten Ende bereitgestellt wird und das erste und das zweite Ende des Verbindungselements (30) jeweils an den Endabschnitten der ersten Seitenplatten (11, 21) des ersten und des zweiten Hohlrahmenelements (10, 20) angeordnet wird;
(iv) das erste Ende des Verbindungselements (30) und der Endabschnitt der ersten Seitenplatte (11) des ersten Hohlrahmenelements (10) miteinander reibrührverschweißt werden, indem ein drehbares Reibrührschweißwerkzeug (250) an der Außenseite des ersten Hohlrahmenelements (10) angewendet wird, und
(v) das zweite Ende des Verbindungselements (30) und der Endabschnitt der ersten Seitenplatte (21) des zweiten Hohlrahmenelements (20) miteinander reibrührverschweißt werden, indem ein drehbares Reibrührschweißwerkzeug (250) an der Außenseite des zweiten Hohlrahmenelements (20) angewendet wird,
**dadurch gekennzeichnet, dass** in Schritt (iii), wenn das erste Ende des Verbindungselements (30) an dem Endabschnitt der ersten Seitenplatte (11) des ersten Hohlrahmenelements (10) angeordnet wird, das erste Ende des Verbindungselements (30) in eine Nut (14) eingefügt wird, wobei die Nut (14) an der Endseite des Endabschnitts der ersten Seitenplatte (21) ausgebildet ist, wobei die Seite in der Dickerichtung des Hohlrahmenelements (10) verläuft, und
nach Schritt (iii) das zweite Ende des Verbindungselements vorübergehend an der ersten Seitenplatte des zweiten Rahmenelements befestigt wird.

2. Reibrührschweißverfahren nach Anspruch 1, wobei die Tiefe der Nut (14) geringer ist als die Hälfte eines Durchmessers eines Kleindurchmesserabschnittes (251) des drehbaren Reibrührschweißwerkzeugs (250), und wobei in Schritt (v) das drehbare Reibrührschweißwerkzeug an wechselseitig anstoßenden Seiten des Verbindungselements (30) und des Endabschnitts der ersten Seitenplatte (11) des ersten Hohlrahmenelements (10) angewendet wird, wobei die wechselseitig anstoßenden Seiten in der Dickerichtung verlaufen.

3. Reibrührschweißverfahren nach Anspruch 1, wobei an jedem der Abschnitte der Hohlrahmenelemente (10, 20), an denen das Verbindungselement angebracht wird, ein vertiefter Abschnitt an jedem der Hohlrahmenelemente (10, 20) vorgesehen wird, wobei die vertieften Abschnitte in der Dickerichtung von den zweiten Seitenplatten (12, 22) zu der Außenseite der ersten Seitenplatten (11, 21) hervorragen.

4. Reibrührschweißverfahren nach Anspruch 1 oder 3, wobei das Reibrührschweißen in Schritt (iv) an gegenseitig anstoßenden Seiten des Verbindungselements (30) und des Endabschnitts der ersten Seitenplatte (11) des ersten Hohlrahmenelements (10) durchgeführt wird, wobei die gegenseitig anstoßenden Seiten in der Dickerichtung verlaufen.

5. Reibrührschweißverfahren nach Anspruch 4, wobei das Reibrührschweißen zwischen dem ersten Ende des Verbindungselements (30) und dem Endabschnitt der ersten Seitenplatte (11) zu einem solchen Ausmaß in der Dickerichtung durchgeführt wird, dass die Nut (14) in der entstehenden Schweißnaht enthalten ist.

6. Reibrührschweißverfahren nach Anspruch 3, wobei das Reibrührschweißen in Schritt (v) dort durchgeführt wird, wo das erste Ende des Verbindungselements (30) in der Querrichtung des vertieften Abschnitts des ersten Hohlrahmenelements (10) überlappt.

7. Rahmenelement zur Verwendung in einem Reibrührschweißverfahren, wobei das Element aufweist:
eine erste (11) und eine zweite (12) Seitenplatte, die parallel zueinander und in einer Dickerichtung des Rahmenelements in Abstand voneinander stehen, wobei die Seitenplatten durch mehrere Rippen (13) verbunden sind, wobei die Rippen (13) eine Fachwerkstruktur definieren, deren Spitze an einer Seite der ersten Seitenplatte (11) ausgebildet ist, und wobei jede Seitenplatte (11, 12) in einer Querrichtung verläuft, die transversal zu der Dickerichtung steht und an einer Seitenkante einen Endabschnitt aufweist, wobei der Endabschnitt und die zweite Seitenplatte (12) über den Endabschnitt der ersten Seitenplatte (11) hinaus ragt,
**dadurch gekennzeichnet, dass** eine Nut (14) auf einer Seite des Endabschnitts der ersten Seitenplatte (11) vorgesehen ist, wobei die Seite in der Dickerichtung verläuft und die Nut (14) in einer Längsrichtung verläuft, die sowohl zu der Dickerichtung als auch zu der Querrichtung orthogonal steht.

8. Rahmenelement nach Anspruch 7, wobei der Endabschnitt der ersten Seitenplatte (11) einen erhabenen Abschnitt (11b) aufweist, der von dessen Außenseite in die Dickerichtung hervorragt, und
die Nut (14) eine Oberseite aufweist, die an einer Spitzenseite des erhabenen Abschnitts (11b) entfernt von einer Verlaufslinie der Außenseite der ersten Seitenplatte (11) angeordnet ist.

## Revendications

1. Procédé de soudage par friction-malaxage comportant les étapes consistant à :
(i) fournir deux éléments de châssis creux (10, 20), ayant chacun des premières (11, 21) et secondes (12, 22) plaques frontales en tôle qui sont parallèles l'une à l'autre et écartées l'une de l'autre dans une direction d'épaisseur des éléments de châssis creux et qui sont reliées par une pluralité de nervures (13, 23), lesdites nervures (13, 23) définissant une structure en treillis ayant un sommet formé sur un côté desdites premières plaques frontales en tôle (11, 21), dans lequel chaque plaque frontale en tôle (11, 12, 21, 22) s'étend dans une direction latérale qui est transversale à ladite direction d'épaisseur et a sur un bord latéral une partie d'extrémité, dans lequel sur chaque élément de châssis creux, la partie d'extrémité de la seconde plaque frontale en tôle (12, 22) fait saillie au -delà de la partie d'extrémité de la première plaque frontale en tôle (11, 21),
(ii) réunir ensemble par un soudage par friction-malaxage les parties d'extrémité (12b, 22b) des secondes plaques frontales en tôle (12, 22) respectives au moyen d'un outil rotatif de soudage par friction-malaxage (250) appliqué sur le côté intérieur desdites parties d'extrémité (12b, 22b) de celles-ci,
(iii) fournir un élément de liaison (30) ayant des première et seconde extrémités et agencer les pre-mière et seconde extrémités dudit élément de liaison (30) respectivement sur les parties d'extrémité des premières plaques frontales en tôle (11, 21) des premier et second éléments de châssis creux (10, 20),
(iv) souder ensemble par friction -malaxage la première extrémité dudit élément de liaison (30) et la partie d'extrémité de la première plaque frontale en tôle (11) du premier élément de châssis creux (10) au moyen d'un outil rotatif de soudage par friction-malaxage (250) qui est appliqué sur le côté extérieur du premier élément de châssis creux (10), et
(v) souder ensemble par friction -malaxage la seconde extrémité dudit élément de liaison (30) et la partie d'extrémité de la première plaque frontale en tôle (21) du second élément de châssis creux (20) au moyen d'un outil rotatif de soudage par friction-malaxage (250) appliqué sur le côté extérieur du second élément de châssis creux (20),
**caractérisé en ce qu'**à l'étape (iii), lorsque ladite première extrémité dudit élément de liaison (30) est agencée sur la partie d'extrémité de la première plaque frontale en tôle (11) du premier élément de châssis creux (10), ladite première extrémité dudit élément de liaison (30) est insérée dans une gorge (14), ladite gorge (14) étant formée dans la face d'extrémité de la partie d'extrémité de la première plaque frontale en tôle (21), ladite face s'étendant dans ladite direction d'épaisseur de l'élément de châssis creux (10), et
après l'étape (iii), ladite seconde extrémité de l'élément de liaison est temporairement fixée sur ladite première plaque frontale dudit second élément de châssis.

2. Procédé de soudage par friction-malaxage selon la revendication 1, dans lequel la profondeur de ladite gorge (14) est inférieure à la moitié d'un diamètre d'une partie à petit diamètre (251) dudit outil rotatif de soudage par friction-malaxage (250) et dans lequel, à l'étape (v), ledit outil rotatif de soudage par friction-malaxage (250) est appliqué sur des faces mutuellement en butée dudit élément de liaison (30) et de la partie d'extrémité de la première plaque frontale en tôle (11) du premier élément de châssis creux (10), lesdites faces mutuellement en butée s'étendant dans ladite dire ction d'épaisseur.

3. Procédé de soudage par friction-malaxage selon la revendication 1, dans lequel sur chacune des pa r-ties desdits éléments de châssis creux (10, 20) sur lesquelles ledit élément de liaison est fixé, est agencée une partie en renfoncement sur chacun desdits éléments de châssis creux (10, 20), lesdites parties en renfoncement s'étendant dans ladite direction d'épaisseur depuis lesdites secondes plaques frontales en tôle (12, 22) jusqu'au côté extérieur desdites premières plaques frontales en tôle (11, 21).

4. Procédé de soudage par friction-malaxage selon la revendication 1 ou la revendication 3, dans lequel le soudage par friction-malaxage à l'étape (iv) est exécuté sur des faces mutuellement en butée dudit élément de liaison (30) et de ladite partie d'extrémité de ladite première plaque frontale en tôle (11) dudit premier élément de châssis creux (10), lesdites faces mutuellement en butée s'étendant dans ladite direction d'épaisseur.

5. Procédé de soudage par friction-malaxage selon la revendication 4, dans lequel ladite étape de soudage par friction-malaxage entre ladite première extrémité dudit élément de liaison (30) et ladite partie d'extrémité de la première plaque frontale en tôle (11) est exécutée sur une étendue dans ladite direction d'épaisseur telle que ladite gorge (14) est incluse dans la soudure résultante.

6. Procédé de soudage par friction-malaxage selon la revendication 3, dans lequel le soudage par fri ction-malaxage à l'étape (v) est exécuté où la première extrémité dudit élément de liaison (30) chevauche, dans ladite direction latérale, ladite partie en renfoncement dudit premier élément de châssis creux (10).

7. Elément de châssis à utiliser dans un procédé de soudage par friction-malaxage, ledit élément comportant :
des première (11) et seconde (12) plaques frontales en tôle qui sont parallèles l'une à l'autre et écartées l'une de l'autre dans une direction d'épaisseur de l'élément de châssis, lesdites plaques frontales en tôle étant reliées par une pluralité de nervures (13), lesdites nervures (13) définissant une structure en treillis ayant un sommet formé sur un côté de ladite première plaque frontale en tôle (11), et chaque plaque frontale en tôle (11, 12) s'étendant dans une direction latérale qui est transversale à ladite direction d'épaisseur et ayant sur un bord latéral une partie d'extrémité, dans lequel la partie d'extrémité de la seconde plaque frontale en tôle (12) fait saillie au-delà de la partie d'extrémité de la première plaque frontale en tôle (11),
**caractérisé en ce qu'**une gorge (14) est agencée sur une face de ladite partie d'extrémité de ladite première plaque frontale en tôle (11), ladite face s'étendant dans ladite direction d'épaisseur et ladite gorge (14) s'étendant dans une direction longitudinale, ladite direction longitudinale étant orthogonale à chacune desdites direction d'épaisseur et direction latérale.

8. Elément de châssis selon la revendication 7, dans lequel ladite partie d'extrémité de ladite première plaque frontale (11) a une partie surélevée (11b) faisant saillie depuis sa face extérieure dans ladite direction d'épaisseur, et
ladite gorge (14) a un côté supérieur s'étendant à partir d'un côté de sommet de ladite partie surélevée (11b), à distance d'une ligne de prolongement du côté extérieur de ladite première plaque frontale en tôle (11).
